# EUROPÄISCHE PATENTSCHRIFT

(11) **EP 3 268 512 B1**
(45) Veröffentlichungstag und Bekanntmachung des Hinweises auf die Patenterteilung: **08.05.2019**
(21) Anmeldenummer: 16709075.2
(22) Anmeldetag: 10.03.2016
(51) Int. Cl.: C25B 11/03, C25B 11/04, C25B 1/00, C04B 35/573, C04B 35/622, C04B 35/628

(54) **VERFAHREN ZUM HERSTELLEN EINER ELEKTRODE, ELEKTRODE UND ELEKTROLYSEVORRICHTUNG**
METHOD FOR PRODUCING AN ELECTRODE, ELECTRODE AND ELECTROLYTIC DEVICE
PROCÉDÉ POUR LA PRODUCTION D'UNE ÉLECTRODE, ÉLECTRODE ET DISPOSITIF D'ÉLECTROLYSE

(30) Priorität: 13.03.2015 DE 102015103739
(43) Veröffentlichungstag der Anmeldung: 17.01.2018
(73) Patentinhaber: Universität Paderborn, 33098 Paderborn (DE)
(72) Erfinder: GREULICH-WEBER, Siegmund, 33175 Bad Lippspringe (DE)
(74) Vertreter: Michalski Hüttermann & Partner Patentanwälte mbB
(86) Internationale Anmeldenummer: PCT/EP2016/055142
(87) Internationale Veröffentlichungsnummer: WO 2016/146477

(56) Entgegenhaltungen:
- CN-B- 103 253 672
- DE-A1-102006 047 045
- DE-A1-102006 055 469
- HAILONG LIU ET AL: "Porous SiC nanowire arrays as stable photocatalyst for water splitting under UV irradiation", MATERIALS RESEARCH BULLETIN, ELSEVIER, KIDLINGTON, GB, Bd. 47, Nr. 3, 28. Dezember 2011 (2011-12-28), Seiten 917-920, XP028461026, ISSN: 0025-5408, DOI: 10.1016/J.MATERRESBULL.2011.12.046 [gefunden am 2012-01-05]

## Beschreibung

Die vorliegende Erfindung betrifft ein Verfahren zum Herstellen einer Elektrode, eine Elektrode, eine Elektrolysevorrichtung sowie ein Verfahren zum photokatalysierten elektrolytischen Spalten von Wasser, durch welche eine besonders effektive Spaltung von Wasser in Sauerstoff und Wasserstoff ermöglicht werden kann.

Verschiedenste elektrochemische Prozesse beziehungsweise Reaktionen benötigen für eine geeignete Durchführung Elektroden. Ein beispielhafter Prozess, der mittels Elektroden durchgeführt wird, ist die elektrolytische Spaltung von Wasser.

Bei einer derartigen Reaktion wird in an sich bekannter Weise Wasser elektrolytisch gespalten in Wasserstoff und Sauerstoff. Eine derartige Reaktion ist beispielsweise anwendbar, um unregelmäßig anfallende elektrische Leistungen aus regenerativen Energiequellen, auch über lange Zeiträume, zu speichern. Im Detail kann das bereits existierende Erdgasnetz mit seinen großen Speichermöglichkeiten genutzt werden (Power to Gas). Hierfür können die Elektrolyse von Wasser und die damit einhergehende Wasserstofferzeugung dienen, wobei der Wasserstoff insbesondere nach Methanisierung in das Erdgasnetz eingespeist werden kann. Die so gespeicherte Energie aus Energieüberschüssen ist jederzeit vielfältig abrufbar. Wichtig ist dabei jedoch ein hoher Wirkungsgrad.

Eine vorteilhafte Möglichkeit einer Elektrolyse ist die Photokatalyse beziehungsweise photokatalytische Elektrolyse. Bei einer derartigen Katalyse kann die für die Elektrolyse benötigte Spannung beziehungsweise Energie ganz oder teilweise durch das Licht bereitgestellt werden. Dies erfolgt beispielsweise durch entsprechende Absorption von Licht, wie insbesondere Sonnenlicht, und dadurch das Bereitstellen einer entsprechenden Spannung beziehungsweise Energie.

Aus dem Artikel "Porous SiC nanowire arrays as stable photocatalyst for water splitting under UV irradiation", G. She et al., Materials Research Bulletin 47 (2012), S. 917-920, wird das Erzeugen von photokatalytischen Eigenschaften von auf einem Siliziumsubstrat ausgerichteten Silizumcarbid-Nanodrähten beschrieben, wobei eine Anordnung mit drei Elektroden verwendet wird. Diese Nanodrähte werden erzeugt durch Karbonisierung von Silizium-Nanodrähten mit Graphitpulver.

Der Artikel "Interaction between water molecules and 3C-SiC nanocrystal surface", Zhao P, Q et al., Physics, Mechanics & Astronomy, Mai 2014, Vol. 57, Nr. 5, 819-828, beschreibt ferner die Beständigkeit von Siliziumcarbid als Nanopartikel in wässrigen Lösungen und die Möglichkeit der Spaltung von Wasser unter Verwendung derartiger Nanomaterialien.

Der Artikel "High-Efficiency Electrochemical Hydrogen Evolution Based on Surface Autocatalytic Effect of Ultrathin 3C-SiC nanocrystals", X. Wu et al., Nano Lett., 12(3), S. 1545-1548, beschreibt ebenfalls das Spalten von Wasser an der Oberfläche von 3C-Siliziumcarbid Nanokristallen in photoelektrochemischen Zellen.

In "Amorphous Silicon Carbide Photoelectrode for Hydrogen Production from Water using Sunlight", F. Zu et al., Solar Energy, ISBN 978-953-307-052-0, S. 432, Februar 2010, ist ferner eine photokatalytische Zelle zur elektrolytischen Spaltung von Wasser beschrieben, die unter Verwendung von amorphem Siliziumcarbid als Photoelektrode ausgebildet ist. Eine derartige Elektrode wird gemäß diesem Dokument durch Gasphasen-Abscheidungsprozesse, wie etwa durch ein PECVD-Verfahren, ausgebildet.

Aus dem Dokument DE 10 2006 055 469 A1 ist auf einem anderen technischen Gebiet, etwa für die Herstellung von Bauteilen aus der Halbleiter-Industrie, von medizinischen Anwendungen oder für die Herstellung von Bauteilen aus dem Turbinenbau, es bekannt, einen Gegenstand aus einem Siliziumcarbidgefüge auszubilden aus einem Rohling aus einem Kohlenstoffmaterial. Das spezifische Verwenden von Fasern für die Elektrodenherstellung ist aus diesem Dokument jedoch nicht bekannt.

CN 103 253 672 B beschreibt ein Verfahren zum Herstellen einer Elektrode für eine photoelektrisch basierte Zersetzung von Wasser, wobei die Elektrode aus nanostrukturiertem Siliziumcarbid aufgebaut ist. Im Detail beschreibt dieses Dokument, dass eine Grundform, wie etwa eine Platte beziehungsweise ein Blatt aus Kohlenstofffasern gemeinsam mit einer Kohlenstoffquelle und einer Siliziumquelle erhitzt wird, um den Kohlenstoff der Grundform in Siliziumcarbid umzuwandeln. Dabei soll eine derartige Elektrode jedoch insbesondere wirken mit einer Gegenelektrode.

In dem Artikel "Porous SiC nanowire arrays as stable photocatalyst for water splitting under UV irradiation", G. She et al., Materials Research Bulletin 47 (2012), S. 917-920, wird das Erzeugen von photokatalytischen Eigenschaften von auf einem Siliziumsubstrat ausgerichteten Silizumcarbid-Nanodrähten beschrieben, wobei eine Anordnung mit drei Elektroden verwendet wird. Diese Nanodrähte werden erzeugt durch Karbonisierung von Silizium-Nanodrähten mit Graphitpulver.

DE 10 2006 047 045 A1 beschreibt eine photovoltaische Einrichtung, die zwei Trägerschichten aufweist, von denen eine Trägerschicht n-dotierte Elektronendonatoren und die andere Trägerschicht Akzeptormaterial als p-dotierte oder undotierte Elektronenakzeptoren aufweist. Die Trägerschichten werden dabei erzeugt ohne das Herstellen einer kohlenstoffhaltigen Vorform.

DE 10 2006 055 469 A1 beschreibt ein Verfahren zur Herstellung eines Gegenstands zumindest teilweise mit Siliciumcarbidgefüge. Derartige Gegenstände werden erzeugt, indem der Gegenstand in einem ersten Schritt aus einem kohlenstoffhaltigen Material im Wesentlichen gemäß seiner Endform erzeugt wird, mit einem kohlenstoffreichen Siliziumdioxid-Granulat zumindest bereichsweise umhüllt und in dieser Umhüllung mindestens einmal bei Temperaturen von 1700°C bis 1900°C geglüht wird, wobei sich das kohlenstoffhaltige Material teilweise oder ganz in Siliciumcarbid umwandelt. Als Anwendungen sind beispielsweise genannt die Halbleiterindustrie, medizinische Anwendungen, Turbinenbau und weitere.

Es besteht weiterhin Verbesserungspotential bei dem Ausbilden von Elektroden insbesondere mit Bezug auf photokatalytische Reaktionen. Insbesondere besteht weiteres Verbesserungspotential hinsichtlich der Effizienz beziehungsweise des Wirkungsgrades bei der photokatalytischen Spaltung von Wasser.

Es ist daher die Aufgabe der vorliegenden Erfindung, eine Lösung zu schaffen, durch welche wenigstens ein Nachteil aus dem Stand der Technik zumindest teilweise überwunden werden kann. Insbesondere ist es die Aufgabe der vorliegenden Erfindung, eine Möglichkeit zu schaffen, durch welche auf kostengünstige Weise beziehungsweise mit einem hohen Wirkungsgrad eine effektive photokatalytische Spaltung von Wasser ermöglicht werden kann.

Die Lösung der Aufgabe erfolgt erfindungsgemäß durch ein Verfahren zum Herstellen einer Elektrode mit den Merkmalen des Anspruchs 1. Die Lösung der Aufgabe erfolgt ferner durch eine Elektrode mit den Merkmalen des Anspruchs 5. Die Lösung der Aufgabe erfolgt ferner durch eine Elektrolysevorrichtung mit den Merkmalen gemäß Anspruch 9 und durch ein Verfahren mit den Merkmalen gemäß Anspruch 11. Schließlich erfolgt die Lösung der vorliegenden Aufgabe durch eine Verwendung nach Anspruch 12. Bevorzugte Ausgestaltungen der Erfindung sind in den Unteransprüchen, in der Beschreibung, in der Figur und dem Beispiel
offenbart, wobei weitere in den Unteransprüchen oder in der Beschreibung oder der Figur oder dem Beispiel beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Es wird ein Verfahren zum Herstellen einer Elektrode, insbesondere für eine photokatalytische elektrolytische Wasserspaltung, vorgeschlagen, aufweisend die Verfahrensschritte:
a) Bereitstellen eines Elektroden-Ausgangsgrundkörpers, wobei der Ausgangsgrundkörper kohlenstoffhaltigen Fasern aufweist;
b) Bereitstellen eines Gemisches umfassend eine Kohlenstoffquelle und eine Siliziumquelle;
c) Erhitzen des Gemisches, insbesondere mit einer Temperatur von wenigstens 1700°C, unter Ausbildung eines Reaktionsgases aufweisend Silizium und Kohlenstoff oder aufweisend eine Silizium-Kohlenstoffverbindung; und
d) In Kontakt bringen des Ausgangsgrundkörpers mit dem Reaktionsgas unter Erzeugung eines Elektroden-Grundkörpers, wobei der Elektroden-Grundkörper Siliziumcarbid-Fasern aufweist, wobei
eine von den kohlenstoffhaltigen Fasern ausgebildete Faserstruktur an zwei unterschiedlichen Bereichen mit unterschiedlichen Dotierstoffen behandelt wird, wobei an einem ersten Bereich eine p-Dotierung erfolgt und wobei an einem zweiten Bereich eine n-Dotierung erfolgt.

Durch ein vorbeschriebenes Verfahren lässt sich auf einfache und kontrollierte Weise eine Elektrode herstellen, die ein effektives elektrolytisches Spalten von Wasser erlaubt, wobei die Elektrode ferner eine photokatalytische Reaktion erlauben kann.

Dabei kann das folgende Verfahren vollständig oder einzelne der Verfahrensschritte a) bis d) und insbesondere c) und d) vorzugsweise unter Schutzgas, wie insbesondere Argon, ablaufen. Unter einem Schutzgas ist dabei insbesondere ein derartiges Gas zu verstehen, welches das Verfahren oder das durch das Verfahren zu erzeugende Produkt nicht negativ beeinflusst beziehungsweise verändert.

Das vorbeschriebene Verfahren dient somit dazu, eine Elektrode zu erzeugen, die insbesondere für eine photokatalytische elektrolytische Wasserspaltung geeignet ist. Unter einer photokatalytischen Wasserspaltung ist dabei insbesondere eine Elektrolysereaktion zu verstehen, durch welche Wasser in Wasserstoff und Sauerstoff gespalten werden kann. Dabei kann eine photokatalytische Wasserspaltung weiterhin insbesondere ein derartiger Prozess sein, bei welchem die für die Wasserspaltung benötigte Spannung beziehungsweise Energie nicht oder nicht vollständig durch eine elektrische Spannungsquelle, sondern zumindest teilweise, insbesondere vollständig, durch das Einstrahlen von Licht, insbesondere von Sonnenlicht, bereitgestellt werden kann.

Das vorbeschriebene Verfahren umfasst zunächst gemäß Verfahrensschritt a) das Bereitstellen eines Elektroden-Ausgangsgrundkörpers, wobei der Ausganggrundkörper kohlenstoffhaltige Fasern aufweist.

Ein derartiger Elektroden-Ausgangsgrundkörper ist somit ein Körper, der als Ausgangssubstrat für die Herstellung der Elektrode dient. Er ist insbesondere in seiner Geometrie wie auch in seinen Abmessungen im Wesentlichen an die gewünschte Geometrie beziehungsweise an die gewünschten Abmessungen der Elektrode angepasst beziehungsweise weist diese im Wesentlichen auf. Dabei sollen lediglich geringfügige Dimensionsveränderungen eingeschlossen sein, welche das Material des Ausgangsgrundkörpers beziehungsweise der Kohlenstoff bei der späteren Behandlung beziehungsweise bei der Bildung von Siliziumcarbid widerfährt. Grundsätzlich kann es bei dem hier beschriebenen Verfahren jedoch ermöglicht sein, dass bei der Bildung von Siliziumcarbid, wie dies nachstehend im Detail beschrieben ist, keine signifikanten Dimensions- und/oder Geometrieänderungen auftreten.

Der verwendete Ausgangsgrundkörper weist ferner kohlenstoffhaltige Fasern auf oder besteht aus den kohlenstoffhaltigen Fasern. Beispielsweise kann der Ausgangsgrundkörper eine platten- oder mattenartige Faserstruktur aufweisen oder aus dieser bestehen. Die Fasern können dabei vollständig aus Kohlenstoff in einer geeigneten Modifikation bestehen, oder die Fasern können nur teilweise aus Kohlenstoff bestehen. Beispielsweise können die Fasern an ihrer äußeren Oberfläche Kohlenstoff aufweisen, wobei der Kohlenstoff beispielsweise auf einem Substrat beziehungsweise auf einem Träger aufgebracht sein kann. Darüber hinaus können die Fasern selbsttragend sein und dabei etwa als Faserstruktur selbst ein Grundgerüst ausbilden, oder die Faserstruktur kann als Ganzes auf einer Trägerstruktur aufgebracht sein.

Grundsätzlich liegt der Ausgangsgrundkörper beziehungsweise seine Faserstruktur porös vor, wobei die Poren geöffnet sein können. Alternativ kann es jedoch auch vorgesehen sein, dass zwar eine kohlenstoffhaltige poröse Faserstruktur vorliegt, wobei die Poren jedoch mit einem anderen Material gefüllt beziehungsweise geschlossen sind, so dass der verwendete Körper keine offenen Poren aufweist. Dabei kann es von Wichtigkeit sein, dass ein Material, welches die Poren füllt, bei den Bedingungen des hier beschriebenen Verfahrens sich zersetzt beziehungsweise in die Gasphase übergeht. Entsprechend kann es von Vorteil sein, dass das entsprechende Material bei einer Temperatur von ≥ 1700°C, beispielsweise in einem Temperaturbereich von ≥ 1700°C bis ≤ 2300°C, etwa von ≥ 1700°C bis ≤ 2000°C, beispielsweise bei 1800°C, in die Gasphase übergeht. Somit können sich die Poren insbesondere bei Verfahrensschritt c) öffnen. Dadurch können in besonders vorteilhafter Weise auch nicht vollständig reine Kohlenstoffkörper verwendet werden.

Der bereitgestellte Ausgangsgrundkörper kann dabei ein herkömmlicher, kommerziell erhältlicher Kohlenstoffkörper beziehungsweise Kohlefaserkörper sein. Beispielsweise sind derartige Ausgangsgrundkörper beziehungsweise die entsprechenden Kohlenstoff-Faserstrukturen kommerziell in verschiedensten erdenklichen Ausgestaltungen bei einer Vielzahl von Firmen erwerblich.

Dabei kann die Porosität insbesondere an die Anforderungen der zu erzeugenden Elektrode angepasst sein. Dadurch soll es insbesondere ermöglicht werden, dass etwa bei einer elektrolytischen Wasserspaltung das Wasser in den Grundkörper beziehungsweise die Faserstruktur eindringen kann und so mit einer möglichst großen Oberfläche des Grundkörpers in Kontakt gelangen kann, um so gespalten zu werden. Hierzu sollte die Porosität ausreichend groß sein, wobei weiterhin in Abhängigkeit der konkreten Anwendung die Stabilität des Grundkörpers nicht zu stark reduziert wird. Beispielsweise und in keiner Weise beschränkend kann etwa eine Porosität vorliegen in einem Bereich von größer oder gleich 60% bis kleiner oder gleich 90%, bevorzugt in einem Bereich von größer oder gleich 75% bis kleiner oder gleich 85%.

Beispielsweise können die kohlenstoffhaltigen Fasern Graphit oder Glas-Kohle aufweisen oder aus einem dieser Materialien bestehen. Insbesondere durch das Vorsehen von Fasern beziehungsweise einer Faserstruktur kann eine gute Stabilität des Grundkörpers vereint werden mit einer hohen Porosität und ferner einer großen Oberfläche des Grundkörpers, so dass bei der fertig erzeugten Elektrode eine hohe Effizienz vorliegen kann.

Mit Bezug auf Fasern können dies insbesondere Gebilde sein, bei denen das Verhältnis von Länge zu Durchmesser mindestens größer oder gleich 3:1 ist, wohingegen in Abgrenzung zu Fasern bei Partikeln das Verhältnis von Länge zu Durchmesser kleiner als 3:1 ist. Beispielsweise kann in der vorliegenden Anmeldung bei den Fasern das Verhältnis von Länge zu Durchmesser auch bei größer oder gleich 10:1, insbesondere größer oder gleich 100:1, beispielsweise größer oder gleich 1000:1 liegen.

Das vorbeschriebene Verfahren umfasst weiterhin gemäß Verfahrensschritt b) das Bereitstellen eines Gemisches umfassend eine Kohlenstoffquelle und eine Siliziumquelle. Ein derartiges Gemisch kann insbesondere ein kohlenstoffhaltiges Siliziumdioxid oder ein kohlenstoffhaltiges Silizium sein, wo bei das Gemisch nicht auf die vorbeschriebenen Beispiele beschränkt ist. Beispielsweise kann das Gemisch ein Feststoff, wie insbesondere ein Granulat sein. Dabei kann es vorgesehen sein, dass die Siliziumquelle und die Kohlenstoffquelle gemeinsam in Partikeln dieses Feststoffgranulats vorliegen. Insbesondere kann es somit bevorzugt sein, dass jedes der Partikel des Feststoffgranulats eine Kohlenstoffquelle und eine Siliziumquelle aufweist. Die Siliziumquelle und die Kohlenstoffquelle dienen dazu, in dem weiteren Verfahren den Kohlenstoff der kohlenstoffhaltigen Fasern des Ausgangsgrundkörpers in Siliziumcarbid umzuwandeln beziehungsweise auszutauschen, wie dies nachfolgend im Detail beschrieben ist. Somit sollte das Gemisch ausgebildet sein, um bei einer definierten Temperatur, insbesondere in einem von ≤ 2300°C, etwa in einem Bereich von ≥ 1700°C bis ≤ 2300°C, beispielsweise in einem Bereich von ≥ 1700°C bis ≤ 2000°C, ein Gas zu erzeugen, das Silizium und Kohlenstoff oder eine Silizium-Kohlenstoff-Verbindung aufweist.

Insbesondere kann in dem Feststoff die Siliziumquelle reines Silizium oder Siliziumdioxid sein und kann in dem Feststoff die Kohlenstoffquelle reiner Kohlenstoff sein, wobei die Feststoffpartikel beispielsweise durch einen Sol-/Gel-Prozess ausbildbar sind, wie dies nachstehend im Detail beschrieben ist. Beispielsweis können die Feststoffpartikel aus Silizium, Kohlenstoff und gegebenenfalls einem Dotierstoff oder mehreren Dotierstoffen, wie dies nachfolgend beschrieben ist, bestehen, oder zumindest den größten Teil, etwa in einem Bereich von ≥ 90Gew.-% ausmachen.

Gemäß Verfahrensschritt c) umfasst das Verfahren weiterhin das Erhitzen des Gemisches unter Ausbildung eines Reaktionsgases aufweisend Silizium und Kohlenstoff oder aufweisend eine Silizium-Kohlenstoffverbindung, insbesondere mit einer Temperatur von wenigstens 1700°C. In diesem Verfahrensschritt c) erfolgt somit ein starkes Erhitzen beziehungsweise das Behandeln des Gemisches unter Ausbildung eines Reaktionsgases. Das Reaktionsgas enthält Silizium und Kohlenstoff, insbesondere in Form einer Verbindung, beispielsweise in Form einer Silizium-Kohlenstoff-Verbindung. Beispielsweise kann das Reaktionsgas Siliziumcarbid enthalten. Das Reaktionsgas dient dazu, mit dem Ausgangsgrundkörper zu reagieren, wie dies nachstehend im Detail beschrieben ist. Dazu kann das Gemisch beispielsweise mit einer Temperatur behandelt werden, die in einem Bereich von ≥ 1700°C liegt, etwa in einem Bereich von ≥ 1700°C bis ≤ 2300°C, beispielsweise in einem Bereich von ≥ 1700°C bis ≤ 2000°C, beispielsweise bei 1800°C, liegt. Die verwendete Temperatur ist jedoch abhängig von dem gewählten Gemisch und ist daher nicht spezifisch beschränkt, insoweit ein geeignetes Reaktionsgas entsteht.

Gemäß Verfahrensschritt d) erfolgt ferner ein In Kontakt bringen des Ausgangsgrundkörpers mit dem Reaktionsgas unter Erzeugung eines Elektroden-Grundkörpers, wobei der Elektroden-Grundkörper Siliziumcarbid-Fasern aufweist. Unter Siliziumcarbid-Fasern beziehungsweise Fasern aus Siliziumcarbid ist dabei insbesondere zu verstehen, dass die erzeugten Fasern vollständig oder nur teilweise aus Siliziumcarbid bestehen. Die genaue Ausgestaltung ist dabei abhängig von der Ausgestaltung des Ausgangsgrundkörpers, da sich der Kohlenstoff in Siliziumcarbid umwandelt beziehungsweise durch dieses ausgetauscht wird, wie dies nachstehend im Detail erläutert wird.

Das in Kontakt bringen des Ausgangsgrundkörpers beziehungsweise seiner Faserstruktur mit dem Reaktionsgas kann beispielsweise realisiert werden, indem der Ausgangsgrundkörper von einem Granulat des Gemisches umhüllt wird, beispielsweise in eine Granulatpackung gelegt und von dieser insbesondere vollständig umschlossen wird. Alternativ kann es vorgesehen sein, dass der Ausgangsgrundkörper keinen direkten Kontakt zu dem Gemisch aufweist, sondern etwa in der Gasphase, beispielsweise oberhalb des Gemisches, angeordnet ist.

Dadurch, dass der Ausgangsgrundkörper mit dem Reaktionsgas in Kontakt gebracht ist, wird es ermöglicht, dass das Reaktionsgas in den Ausgangsgrundkörper eindringt und das kohlenstoffhaltige Material der Fasern teilweise oder vorzugsweise vollständig in Siliziumcarbid umwandelt beziehungsweise den Kohlenstoff gegen Siliziumcarbid austauscht. Dadurch kann auf Basis einer bereitgestellten Kohlenstoffstruktur eine definierte Siliziumcarbidstruktur erzeugt werden.

Um die Erzeugung der Siliziumcarbidstruktur zu ermöglichen beziehungsweise zu verbessern und insbesondere um den Austausch des Kohlenstoffs durch Siliziumcarbid zu ermöglichen beziehungsweise zu verbessern kann es dabei vorgesehen sein, dass der Ausgangsgrundkörper und damit zumindest die Faserstruktur ebenfalls einer Temperaturbehandlung unterworfen wird. Beispielsweise kann auch der Elektrodengrundkörper auf eine Temperatur erhitzt werden, die in einem Bereich von ≥ 1700°C liegt, etwa in einem Bereich von ≥ 1700°C bis ≤ 2300°C, beispielsweise in einem Bereich von ≥ 1700°C bis ≤ 2000°C, beispielsweise bei 1800°C, liegt.

Der wesentliche Vorteil des hier beschriebenen Verfahrens liegt beispielsweise darin, dass aus dem Gemisch mit der Siliziumquelle und der Kohlenstoffquelle vorzugsweise unmittelbar reines Siliziumcarbidgas oder siliziumcarbidhaltiges Gas mit einem hohen Siliziumcarbidanteil gebildet werden kann, das direkt in das kohlenstoffhaltige Material des Ausgangsgrundkörpers eindiffundieren und dort den Kohlenstoff ganz oder teilweise ersetzen kann. Damit wird die ursprüngliche weiche Kohlenstoffmatrix des Ausgangsgrundkörpers ganz oder teilweise in eine harte Siliziumcarbid-Matrix des Elektroden-Grundkörpers umgewandelt und die Elektrode erhält damit partiell oder vorzugsweise vollständig die vorteilhaften Eigenschaften des Siliziumcarbids. Da mit dieser Umwandlung der Matrix keine wesentlichen Form- und Maßänderungen des Grundkörpers einher gehen, kann dieser nach der Umwandlung direkt ohne weitere Nachbearbeitungen eingesetzt werden. Der hergestellte Grundkörper entspricht im Wesentlichen dem ursprünglichen Kohlenstoff-Abbild und umfasst oder besteht aus hartem polykristallinem porösen Siliziumcarbid.

Das Verfahren ist maßhaltig und hochskalierbar auf industriellen Maßstab. Es handelt sich somit um ein kostengünstiges Verfahren, Elektroden aus Siliziumcarbid herzustellen. Die Kohlenstoff-Modifikation Graphit ist für die Faserstruktur des Ausgangsgrundkörpers aufgrund ihrer sehr geringen Härte sehr einfach zu bearbeiten, daher ist kein großer Aufwand nötig. Das Verfahren ist jedoch auch für andere kohlenstoffhaltige Materialien wie etwa Glas-Kohle geeignet, diese ist jedoch härter als Graphit und bedürfen gegebenenfalls einer aufwändigeren Herstellung.

Das vorbeschriebene Verfahren zeichnet sich somit insbesondere durch seine Kostengünstigkeit aus, da eine relativ niedrige Herstellungstemperatur und geringe Kosten für die Ausgangsmaterialien ermöglicht werden können. Darüber hinaus ist kein Hochdruck und keine aufwändige Bearbeitung der Elektrode nach der Siliziumcarbidbildung notwendig, dadurch werden nicht nur Kosten gering gehalten sondern der Prozess wird weiterhin sehr einfach gehalten, was die Prozessführung erleichtert.

Insbesondere für das Herstellen von Elektroden für eine photokatalytische Spaltung von Wasser kann das vorbeschriebene Verfahren signifikante Vorteile aufweisen. Denn insbesondere für derartige Prozesse ist die Wahl des Elektrodenmaterials, insbesondere als Halbleiter, und dessen Struktur entscheidend, um einen besonders hohen Wirkungsgrad und damit ein besonders effektives Verfahren zu ermöglichen. Durch das vorbeschriebene Verfahren wird es dabei möglich, einkristalline Fasern aus insbesondere mikro- oder nanostrukturiertem Siliziumcarbid zu erzeugen, wobei die Fasern insbesondere als 3C-SiC vorliegen können. Derartiges Material wird im Stand der Technik auf diesem Gebiet bisher wenig Beachtung geschenkt, da die Herstellung besonders schwierig erschien und eine kommerzielle Anwendung daher mit Problemen behaftet war.

Die durch das vorbeschriebene Verfahren erzeugbaren Faserstrukturen aus Siliziumcarbid sind durch das Fasergewebe äußerst porös und können von dem zu zersetzenden Wasser vollständig durchdrungen werden. Dies ist von Vorteil, da bei einer Wasserelektrolyse insbesondere die Oberfläche der Elektrode von Wichtigkeit ist, da eine Gaserzeugung unmittelbar an der Oberfläche erfolgt. Dadurch sind insbesondere die unter Verwendung einer Faserstruktur erzeugbaren Elektroden besonders vorteilhaft für eine Wasserspaltung geeignet.

Darüber hinaus bietet die nach dem vorbeschriebenen Verfahren herstellbare Elektrode den Vorteil, dass das erzeugte Siliziumcarbid als Halbleiter mit seinen elektronischen Eigenschaften besonders gut für eine photokatalytische Elektrolysereaktion, insbesondere für eine photokatalytische Spaltung von Wasser in Sauerstoff und Wasserstoff geeignet ist, da diese in einer Elektrolyseanordnung praktisch eine kurzgeschlossene Solarzelle darstellen kann, die genau die notwendige Spannung zur Wasserelektrolyse bereitstellen kann, wenn sie mit Licht, wie etwa mit Sonnenlicht, bestrahlt wird.

Die Elektroden sind in nahezu beliebigen Größen, Dicken und Geometrien herstellbar, so dass eine besonders vorteilhafte Anpassbarkeit an das gewünschte Anwendungsgebiet gegeben ist. Beispielsweise lassen sich für kommerzielle Anwendungen auch sehr große Elektrolysezellen bereitstellen, die auch die Abmessungen heutiger Solarpaneele aufweisen können.

Beispielsweise können die Kohlenstoffstruktur und damit auch die Siliziumcarbidstruktur vergleichsweise dick, etwa plattenförmig ausgestaltet sein, wobei eine besonders hohe Stabilität ermöglicht werden kann. Alternativ kann eine gewisse Flexibilität gegeben sein, wenn die Struktur etwa mattenförmig ausgestaltet ist. In einer weiteren Ausgestaltung kann die Struktur vergleichsweise dünn sein und etwa textilartig beziehungsweise stoffartig ausgestaltet sein, oder kann ein Gelege oder Gewirk vorliegen. Grundsätzlich kann die Faserstruktur beziehungsweise der Ausgangsgrundkörper eine Dicke in einem Bereich von ≥ 0,5mm bis ≤ 10mm aufweisen.

Nach einer Umwandlung des Kohlenstoffs in Siliziumcarbid weisen die Elektroden ferner eine enorme Härte und Stabilität auf, sind somit mechanisch sehr robust. Darüber hinaus ist auch eine gute chemische Inertheit gegenüber einer Vielzahl von Chemikalien und Bedingungen gegeben, so dass auch durch etwaige Elektrolyten in dem zu zersetzenden Wasser keine Beschädigung der Elektrode zu erwarten ist. Ein weiterer Vorteil sind die Hochtemperatureigenschaften des Materials mit einer Stabilität von bis zu 2400°C oder darüber, so dass auch eine signifikante Erwärmung der Elektrolysevorrichtung, etwa durch Sonnenlicht, keine negative Folgen für die Elektrode aufweist.

Dadurch, dass die bei einem vorbeschriebenen Verfahren erzeugten Fasern insbesondere kristallin sind, können die Eigenschaften mit Bezug auf Stabilität und Inertheit gegenüber Chemikalien und Bedingungen weiter verbessert werden.

Ferner ist bei dem erzeugten Siliziumcarbid eine gute Dotierbarkeit gegeben, was die Leitfähigkeit erhöhen kann und so die Ausgestaltungsmöglichkeiten weiter erweitern kann, wie dies nachstehend im Detail erläutert ist.

Darüber hinaus kann insbesondere durch das mögliche Vorsehen der Faserstruktur als Kohlenstoffstruktur in dem Ausgangsgrundkörper eine Mikro- beziehungsweise Nanostrukturierung einfacher ermöglicht werden, als eine vergleichbare Siliziumcarbid-Struktur. Somit kann insbesondere eine Elektrode mit einer besonders großen Oberfläche im Stand der Technik nur schwer realisierbar sein. Dies wird gemäß dem Stand der Technik beispielsweise mit anderen SiC-Polytypen durch aufwändige Ätzverfahren realisiert, wie etwa durch elektrochemisches Ätzen, von vergleichsweise kostenintensiven 4H- oder 6H-SiC-Wafern. Mit dem vorbeschriebenen Verfahren, welches auf der Umwandlung einer gegebenen Kohlenstoffstruktur in eine Siliziumcarbidstruktur basiert, können dagegen auf preiswerte Weise einkristalline Mikro- oder Nanofasern erzeugt werden, die auch für eine Dotierung gut und für die Wasserspaltung sehr gut geeignet sind.

Bei dem hier beschriebenen Verfahren wird das Gemisch, wie etwa ein Granulat, beispielsweise zusammen mit dem umzuwandelnden Kohlenstoff-Formteil etwa für wenige Minuten, etwa in einem Bereich von 1800°C erhitzt, wobei der Kohlenstoff der Faserstruktur in Siliziumcarbid umgewandelt wird. Beispielsweise kann ein Erhitzen stattfinden in einem zeitlichen Bereich von ≥ 1 Minute bis ≤ 4 Stunden.

Von Vorteil kann es weiterhin sein, wenn die Temperaturbehandlung gegebenenfalls des Ausgangsgrundkörpers und/oder insbesondere des Gemisches, wie etwa eines Ausgangsgrundkörpers in einer Umhüllung aus kohlenstoffhaltigem Siliziumdioxid-Granulat, nur zwischen 1700 °C und 2300 °C, vorzugsweise 1800 °C betragen kann, um die beschriebene Bildung des siliziumkarbidhaltigen Gases auszulösen und die entsprechenden Diffusionsvorgänge ablaufen zu lassen. Hierdurch sind keine Glühtemperaturen weit oberhalb von 2000 °C wie typischerweise von 2700 °C und mehr erforderlich, die zum einen den Vorgang wesentlich besser steuerbar machen und zum anderen weit weniger Energie verbrauchen.

Weiterhin kann es vorgesehen sein, dass der Grundkörper im Anschluss an das Glühen beziehungsweise nach einer Siliziumcarbidbildung und nach Entfernen des Gemisches mit der Siliziumquelle und der Kohlenstoffquelle zur Entfernung von anhaftenden Kohlenstoffanteilen unter Umgebungsatmosphäre bei einer Nachbehandlungstemperatur nachbehandelt wird, wobei die die Nachbehandlungstemperatur oberhalb der Karbonisierungstemperatur von mindestens 350 °C liegt und vorzugsweise 1000 °C betragen kann. Hierdurch können eventuell in der Matrix des Gegenstandes nach dem Glühen verbliebene Kohlenstoffreste entfernt werden, die etwa die mechanischen oder elektrischen Eigenschaften der Elektrode beeinträchtigen könnten.

Weiterhin ist es denkbar, dass die Temperaturbehandlung des Gemisches und insbesondere des Ausgangsgrundkörpers mehrfach, insbesondere mehr als drei Mal, jeweils insbesondere unter zumindest teilweisem Austausch und/oder Erneuerung des Gemisches mit der Kohlenstoffquelle und der Siliziumquelle, wiederholt wird. Durch die Bildung des siliziumcarbidhaltigen Gases kann aufgrund des Verbrauchs des Kohlenstoffes in dem Gemisch durch einen Austausch desselben und mehrfache Temperaturbehandlung dafür gesorgt werden, dass stets ausreichend siliziumcarbidhaltiges Gas gebildet wird und damit der Austausch des Kohlenstoffs in dem Grundkörper durch Siliziumcarbid zügig ablaufen kann. Beispielsweise wird der Grundkörper zusammen mit dem Gemisch, etwa in Argonatmosphäre, für wenige Stunden erhitzt, dann wird frisches Gemisch hinzugefüllt und es wird wiederum erhitzt. Dieser Vorgang wird mehrmals, vorteilhaft dreimal, wiederholt, je nach Größe des Grundkörpers. Abschließend kann der Grundkörper an Luft erhitzt werden, um Kohlenstoffreste wegzubrennen. Dabei kann es insbesondere von Vorteil sein, wenn eine automatische Nachführung für das Gemisch vorgesehen ist, welche beispielsweise zeitabhängig oder in Abhängigkeit eines weiteren Parameters kohlenstoff- und siliziumhaltiges Gemisch in einen Reaktor, wie etwa in einen Ofen, nachführt.

Die Dauer des Glühvorganges und die Häufigkeit der Auswechslung des Gemisches kann die Eindringtiefe der Siliziumcarbidbildung in der Faserstruktur beeinflussen. Damit kann insbesondere bei nur oberflächennahem oder partiellem Ersetzen der Kohlenstoffmatrix des Grundkörpers der Grad der Bildung von Siliziumcarbid gut gesteuert werden. Vorteilhaft ist es jedoch, dass die gesamte Faserstruktur nach der Temperaturbehandlung aus Siliziumcarbid ausgestaltet ist.

Zusammenfassend wird es durch das vorbeschriebene Verfahren somit möglich, auf einfache und kostengünstige Weise eine Elektrode zu schaffen, die insbesondere für eine photokatalytische Spaltung von Wasser mit einem hohen Wirkungsgrad geeignet ist.

In einer bevorzugten Ausgestaltung des vorbeschriebenen Verfahrens kann es vorgesehen sein, dass das in Verfahrensschritt b) verwendete Gemisch umfassend eine Kohlenstoffquelle und eine Siliziumquelle bereitgestellt wird unter Verwendung eines Sol-Gel-Prozesses. Unter einem Sol-Gel-Prozess ist dabei in an sich bekannter Weise ein derartiger Prozess zu verstehen, bei dem Ausgangsstoffe der zu erzeugenden Verbindung, die sogenannten Präkursoren, in einem Lösungsmittel vorliegen, wobei dieses Gemisch als Sol bezeichnet wird. Im Verlaufe des Verfahrens bildet sich durch Trocknung beziehungsweise Alterung ein sogenanntes Gel aus, woraus durch weitere Behandlung, insbesondere Temperaturbehandlung, ein Feststoff entstehen kann. Dieser Feststoff kann somit durch die Auswahl der Präkursoren definiert werden und enthält die Kohlenstoffquelle und die Siliziumquelle für die Siliziumcarbidbildung und kann ferner gegebenenfalls einen Dotierstoff zum Dotieren des Siliziumcarbids enthalten, welcher bereits bei der Zubereitung des Sols zugegeben werden kann.

Auch der Sol-Gel-Prozess kann dabei vollständig oder zumindest teilweise in einer Schutzatmosphäre, wie insbesondere in einer Argonatmosphäre, ablaufen.

Insbesondere mit Bezug auf eine Bereitstellung des Gemisches unter Verwendung eines Sol-Gel-Prozesses kann es vorgesehen sein, dass der Sol-Gel-Prozess zumindest die folgenden Verfahrensschritte aufweist:
e) Bereitstellen eines Präkursorgemisches mit einem Siliziumpräkursor, einem Kohlenstoffpräkursor und gegebenenfalls einem Dotierstoff, wobei das Präkursorgemisch in einem Lösungsmittel vorliegt;
f) Behandeln des Präkursorgemisches bei insbesondere zu der Raumtemperatur (22°C) erhöhter Temperatur unter Trocknung des Präkursorgemisches; und
g) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

Gemäß Verfahrensschritt e) können somit zunächst die Präkursoren bereitgestellt werden, welche zu einem Feststoff verarbeitet werden und anschließend nach dem Sol-Gel-Prozess als Kohlenstoffquelle beziehungsweise als Siliziumquelle dienen können, die in Verfahrensschritt b) verwendet werden. Die Wahl der Siliziumquelle beziehungsweise der Kohlenstoffquelle beziehungsweise des Silizium-Präkursors und des Kohlenstoff-Präkursors ist somit nicht grundsätzlich beschränkt. Bevorzugte Siliziumpräkursoren können beispielsweise Silikate, wie etwa Siliziumacetate, Siliziummercaptate oder Siliziumalkoxide, beispielsweise Alkalisilikate, beispielsweise Tetraethylorthosilikat (TEOS), beziehungsweise Silane, wie etwa Tetraoxysilan, Tetramethoxysilan, Tetramethylorthosilan, Tetraisopropoxysilan oder Tetra-n-Butoxysilan umfassen, wohingegen bevorzugte Kohlenstoffpräkursoren Zucker, wie etwa Saccharose, umfassen können, um die Feststoffpartikel auszubilden, welche als Kohlstoffquelle und Siliziumquelle in Verfahrensschritt b) bereitgestellt beziehungsweise verwendet werden. Beispielsweise kann ein Gemisch aus Flüssigzucker und Tetraethylorthosilikat, gelöst in Ethanol, als Gemisch von Kohlenstoffpräkursor und Siliziumpräkursor bei Verfahrensschritt e) bereitgestellt werden, wobei die Erfindung in verständlicher Weise nicht auf die vorgenannten Beispiele beschränkt ist.

Dieses kann gemäß Verfahrensschritt f) beispielsweise in einem Temperaturbereich nahe dem Siedepunkt des Lösungsmittels, bei der Verwendung von Ethanol etwa in einem Bereich von 60-70°C, unter Luftabschluss zum Gelieren gebracht beziehungsweise gealtert werden, wobei es ferner bei einer Temperatur oberhalb des Siedepunkts getrocknet werden kann. Dabei kann es von Vorteil sein, wenn beim Trocknen des Feststoffes Partikel entstehen, die einen maximalen Durchmesser in einem Bereich von etwa ≥1 µm bis ≤ 2mm liegen, um auf vorteilhafte Weise ein Siliziumcarbid-haltiges Gas auszubilden. Eine derartige Partikelgröße kann beispielsweise ermöglicht werden durch einen Rührvorgang während des Trocknens, wobei die Partikelgröße etwa einstellbar sein kann durch das verwendete Rührwerk, eine Umdrehungsgeschwindigkeit und die Dauer beziehungsweise Stärke des Rührens, wie dies dem Fachmann grundsätzlich bekannt ist.

Gemäß Verfahrensschritt g) erfolgt anschließend gegebenenfalls ein Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C, beispielsweise bei 1000°C. Durch diesen Verfahrensschritt kann der erzeugte Feststoff insbesondere von Verunreinigungen befreit werden.

Durch Verfahrensschritt f) beziehungsweise gegebenenfalls g) wird dabei das Gemisch gemäß Verfahrensschritt b) bereitgestellt beziehungsweise fertiggestellt, wobei durch den vorbeschriebenen Sol-Gel-Prozess Partikel entstehen können, die jeweils eine Siliziumquelle, wie beispielsweise reines Silizium oder Siliziumdioxid, und eine Kohlenstoffquelle, wie etwa reinen Kohlenstoff, enthalten können. Bei Zusetzung eines Dotierstoffes während des Sol-Gel-Prozesses kann auch dieser in den Partikeln vorliegen, wie dies nachstehend im Detail beschrieben ist. Somit kann durch den Sol-Gel-Prozess ein Gemisch auf quasi atomarer Ebene ermöglicht werden, was die Herstellung von Siliziumcarbid-haltigem Gas deutlich vereinfacht.

Zusammenfassend kann somit in einer Ausgestaltung ein Sol-Gel-Verfahren Anwendung finden, bei dem die zu verarbeitenden Materialien miteinander eine Mischung in Form eines Gels bilden und anschließend getrocknet werden, und in einem weiteren Schritt ein Siliziumcarbid-haltiges Gas zu erzeugen, durch welches der Kohlenstoff in der Faserstruktur ausgetauscht werden kann. Der als Prozess an sich bekannte Sol-Gel-Prozess bietet einen gut beherrschbaren und weit variierbaren Prozess.

Durch die Verwendung eines Sol-Gel-Prozesses zur Herstellung des Gemisches mit der Kohlenstoffquelle und der Siliziumquelle kann die Verteilung des Kohlenstoffs oder auch anderer hinzuzufügender Stoffe in dem Gemisch sehr genau und sehr fein, quasi auf atomarer Basis eingestellt werden, wodurch sich die Bildung des siliziumkarbidhaltigen Gases verbessern kann oder auch erst in größerem Maßstab ermöglicht wird. Durch die mittels Sol-Gel-Prozess erreichbare feine Verteilung des Kohlenstoffs und der anderen hinzuzufügenden Stoffe des Gemisches kann beim Glühvorgang das sich bildende siliziumcarbidhaltige Gas unmittelbar mit dem Kohlenstoff und den anderen hinzuzufügenden Stoffe reagieren und steht sofort für die Diffusionsvorgänge oberflächennah an der Faserstruktur zur Verfügung. Damit kann insbesondere auch die sonst notwendige externe Erzeugung eines siliziumcarbidhaltigen Gases entfallen.

Es ist ferner vorgesehen, dass die kohlenstoffhaltigen Fasern zumindest teilweise mit einem Dotierstoff behandelt werden. In anderen Worten kann es vorgesehen sein, dass die gebildeten Siliziumcarbidfasern zumindest teilweise als dotierte Fasern ausgestaltet sind. Dabei kann in Abhängigkeit der Ausgestaltung einer mit der herzustellenden Elektrode ausgestatteten Elektrolysevorrichtung eine Dotierung beispielsweise der gesamten Elektrode erfolgen. In dieser Ausgestaltung kann die Leitfähigkeit der gesamten Elektrode verbessert werden. Dabei kann diese Ausgestaltung insbesondere dann von Vorteil sein, wenn die Elektrode etwa mit einer entsprechenden Gegenelektrode in einer Elektrolysevorrichtung verwendet wird. Es ist vorgesehen, dass nur bestimmte Bereiche der Elektrode gleich oder unterschiedlich dotiert werden, wobei etwa eine von den kohlenstoffhaltigen Fasern ausgebildete Faserstruktur an zwei unterschiedlichen Bereichen mit unterschiedlichen Dotierstoffen behandelt wird, wobei an einem ersten Bereich eine p-Dotierung erfolgt und wobei an einem zweiten Bereich eine n-Dotierung erfolgt. Beispielsweise kann es vorgesehen sein, dass der Ausgangsgrundkörper beziehungsweise das erzeugte Fasergefüge an zwei gegenüberliegenden Seiten unterschiedlich dotiert wird, wobei an einer ersten Seite eine p-Dotierung erfolgt und wobei an einer der ersten Seite gegenüberliegenden Seite eine n-Dotierung erfolgt. In dieser Ausgestaltung kann die Elektrode derart ausgestaltet werden, dass zwei unterschiedliche und insbesondere entgegengesetzt polbare Elektrodenbereiche geformt werden. Insbesondere in dieser Ausgestaltung kann somit eine Elektrolysevorrichtung geformt werden, welche einen besonders einfachen und kompakten Aufbau ermöglicht, da die Elektrolysevorrichtung nur die wie vorbeschrieben hergestellte Elektrode aufweisen braucht, ein Aufbau mit unterschiedlichen Elektroden und einer entsprechenden elektrischen Anbindung jedoch nicht notwendig ist. Somit erlaubt insbesondere diese Ausgestaltung eine Höchstintegration einer Wasserstoff-erzeugenden Zelle in nur eine Faserstruktur, wie etwa Faserplatte.

Dabei kann insbesondere eine geeignete Dotierung des Siliziumcarbids für eine besonders effektive Wasserspaltung von Vorteil sein. Insbesondere eine p-Dotierung mit einer gleichzeitigen n-Dotierung ist bei den Lösungen aus dem Stand der Technik oftmals nicht oder nicht problemlos erreichbar. Insbesondere ist eine p-Dotierung ohne omnipräsente n-Dotierung gemäß dem Stand der Technik nicht oder zumindest nicht problemlos erzielbar.

Mit Bezug auf den jeweiligen Dotierstoff kann dieser ausgewählt werden auf Basis der gewünschten Dotierung. Als Dotierungsmaterialien können bevorzugt Phosphor (P) oder Stickstoff (N) für eine n-Dotierung oder Bor (B) oder Aluminium (Al) für eine p-Dotierung verwendet werden.

Mit Bezug auf eine Dotierung der gesamten Elektrode oder auch einzelner Elektrodenbereiche kann es von Vorteil sein, wenn der oder die Dotierstoffe Bestandteil des Gemisches gemäß Verfahrensschritt b) sind. Dabei kann es weiterhin von Vorteil sein, wenn die Dotierungsstoffe im nasschemischen Teil der Sol-Gel-Synthese eingebracht werden, wodurch die Dotierungsmaterialien während der thermischen Behandlung in die Siliziumcarbid-Fasern eingebaut werden. Die Dotierungsmaterialien können hierbei entweder als lösliche Verbindung beigegeben werden oder metallisch addiert werden. Für eine Dotierung mit Stickstoff eignen sich etwa elementarer Stickstoff, Ammoniumchlorid, Kaliumnitrat, Salpetersäure, Melamin oder Harnstoff, für eine Dotierung mit Phosphor etwa Kaliumhydrogenphosphat, di-Natriumhydrogenphosphat, Phosphorsäure, für eine Dotierung mit Aluminium etwa Aluminiumchlorid oder elementares Aluminium, oder für eine Dotierung mit Bor etwa di-Natriumtetraborat.

Eine unterschiedliche Dotierung zweier insbesondere entgegengesetzt angeordneter Elektrodenbereiche kann beispielsweise erfolgen durch eine Dotierung aus der Gasphase bei der Erzeugung der Siliziumcarbidstruktur. Beispielsweise kann der Ausgangsgrundkörper auf das Gemisch abgelegt werden oder in der Gasphase oberhalb des Gemisches angeordnet werden und so von der Unterseite mit einem einen n-Dotierstoff enthaltenden Reaktionsgas beaufschlagt werden, etwa unter Einwirkung einer geeigneten Temperatur. Dies gilt insbesondere dann, wenn das Gemisch einen entsprechenden n-Dotierstoff enthält. Anschließend kann der Grundkörper umgedreht werden und etwa auf oder über ein einen p-Dotierstoff enthaltendes Gemisch angeordnet und so mit Reaktionsgas beaufschlagt werden, wobei ebenfalls eine geeignete Temperatur eingestellt werden kann, um so eine p-Dotierung zu erzeugen. Durch die Einstellung der Temperatur und der verwendeten Zeitdauer kann dabei ermöglicht werden, dass der Grundkörper jeweils nur von der Unterseite entsprechend dotiert wird und kann ferner die Tiefe der Dotierung angepasst werden. Mit Bezug auf eine n- oder p-Dotierung kann die Reihenfolge selbstverständlich auch getauscht werden.

Beispielhaft können die vorgenannten Dotierstoffe oder weitere das jeweilige Atom umfassende Dotierstoffe verwendet werden, welche sich bei einer Temperatur oberhalb von 1700°C, beispielsweise in einer Temperatur von ≥ 1700°C bis ≤ 2300°C, etwa von ≥ 1700°C bis ≤ 2000°C, beispielhaft bei 1800°C, in die Gasphase überführen lassen und so zusammen mit dem in der Gasphase sich befindlichen Reaktionsgas, beispielsweise Siliziumcarbid, sich insbesondere auf atomarer Ebene in die Faser einbauen lassen, um so dotiertes Siliziumcarbid zu erzeugen.

Hinsichtlich weiterer Vorteile und technischer Merkmale des vorbeschriebenen Verfahrens wird hiermit explizit auf die Beschreibung der Elektrode, der Elektrolysevorrichtung, des Elektrolyseverfahrens, der Verwendung sowie auf die Figuren und das Beispiel Bezug genommen, und umgekehrt.

Gegenstand der vorliegenden Erfindung ist ferner eine Elektrode für eine photokatalytische Elektrolyse, insbesondere für eine photokatalytische Wasserspaltung, aufweisend einen Grundkörper oder bestehend aus einem Grundkörper, der Fasern aus Siliziumcarbid aufweist, wobei die Elektrode hergestellt ist nach einem Verfahren, wie dies vorstehend im Detail beschrieben ist. Unter dem Grundkörper ist dabei insbesondere ein für die gewünschte Funktion aktiver Bereich zu verstehen.

Eine derartige Elektrode weist insbesondere den Vorteil auf, dass sie bei einer elektrolytischen Wasserspaltung eine besonders hohe Effizienz beziehungsweise einen hohen Wirkungsgrad aufweisen kann, da sie insbesondere aus einkristallinem Siliziumcarbid, insbesondere 3C-SiC, ausgestaltet ist. Drüber hinaus bietet eine derartige Elektrode den Vorteil einer besonders hohen Robustheit und Anpassbarkeit an das gewünschte Anwendungsgebiet. Schließlich weist eine derartige Elektrode eine besonders einfache und kostengünstige und ferner genau definierbare Herstellbarkeit auf.

Im Detail kann durch die Faserstruktur der Elektrode eine hohe Oberfläche und ferner eine gute Durchdringung der Elektrode mit Wasser geschaffen werden. Dadurch kann es erlaubt werden, dass eine vergleichsweise hohe Effizienz der Wasserspaltung ermöglicht wird. Darüber hinaus kann durch das verwendete Fasermaterial, nämlich das Siliziumcarbid, eine Photokatalyse mit einem hohen Wirkungsgrad geschaffen werden, wie dies vorstehend mit Bezug auf das Verfahren im Detail beschrieben ist.

Beispielsweise können die Fasern eine Dicke in einem Bereich von ≥ 1µm bis ≤ 30µm, etwa in einem Bereich von ≥ 8µm bis ≤ 10µm, aufweisen, was beispielsweise bei einer Dicke des Grundkörpers von 1mm vorliegen kann.

Es kann vorgesehen sein, dass die Elektrode zumindest teilweise dotiertes Siliziumcarbid aufweist. In dieser Ausgestaltung kann die Leitfähigkeit der Elektrode gegenüber dem reinen Halbleitermaterial weiter erhöht werden und die Effektivität dadurch ebenfalls weiter erhöht werden.

Dazu kann beispielsweise die gesamte Elektrode mit einer einheitlichen Dotierung versehen sein.

Alternativ kann es vorgesehen sein, dass die Elektrode einen ersten Elektrodenbereich mit p-dotiertem Siliziumcarbid aufweist, und dass die Elektrode ferner einen zweiten Elektrodenbereich mit n-dotiertem Siliziumcarbid aufweist. Beispielsweise kann der erste Elektrodenbereich von dem zweiten Elektrodenbereich durch einen Bereich mit undotiertem Siliziumcarbid oder einen anderen Bereich getrennt sein. Weiterhin kann es vorgesehen sein, dass der erste Elektrodenbereich an einer ersten Seite der Elektrode vorliegt und dass der zweite Elektrodenbereich an einer der ersten Seite gegenüberliegend angeordneten zweiten Seite der Elektrode angeordnet ist.

In dieser Ausgestaltung kann die Elektrode somit derart ausgestaltet sein, dass zwei elektrisch unterschiedliche und insbesondere mit einer Spannungsdifferenz beaufschlagbaren Elektrodenbereiche geformt werden. Dazu kann zwischen den entsprechend dotierten Elektrodenbereichen insbesondere ein Bereich mit nicht dotiertem Siliziumcarbid vorliegen. Die entsprechend dotierten Bereiche können eine Dicke im Nanometerbereich aufweisen. Beispielsweise können die dotierten Bereiche eine Dicke aufweisen, die in einem Bereich von ≥ 10 µm bis ≤ 5 mm, etwa in einem Bereich von ≥ 1 mm bis ≤ 2 mm, liegt.

Insbesondere in einer Ausgestaltung mit unterschiedlich dotierten Bereichen kann eine Elektrolysevorrichtung geformt werden, welche einen besonders einfachen und kompakten Aufbau ermöglicht, da die Elektrolysevorrichtung nur die wie vorbeschrieben ausgestaltete Elektrode aufweisen braucht, ein Aufbau mit unterschiedlichen Elektroden und einer entsprechenden elektrischen Anbindung jedoch nicht notwendig ist. Somit erlaubt insbesondere diese Ausgestaltung eine Höchstintegration einer Wasserstoff-erzeugenden Zelle in nur eine Faserstruktur, wie etwa in einer Faserplatte.

In einer weiteren Ausgestaltung kann es ferner vorgesehen sein, dass der Grundkörper beziehungsweise seine Faserstruktur eine Porosität in einem Bereich von größer oder gleich 60% bis kleiner oder gleich 90%, bevorzugt in einem Bereich von größer oder gleich 75% bis kleiner oder gleich 85%, aufweist, wobei sich die angegebene Werte auf freies Volumen in Bezug auf das Gesamtvolumen beziehen. Insbesondere eine Porosität in einem derartigen Bereich kann es ermöglichen, dass beispielsweise Wasser bei einer elektrolytischen Wasserspaltung in das Innere der Elektrodenstruktur eindringen kann und dabei eine besonders große Oberfläche der Elektrode gleichzeitig mit dem Wasser in Kontakt gelangen kann. Dadurch kann insbesondere in dieser Ausgestaltung eine besonders hohe Effektivität der Wasserspaltung ermöglicht werden.

Hinsichtlich weiterer Vorteile und technischer Merkmale der vorbeschriebenen Elektrode wird hiermit explizit auf die Beschreibung der Verfahren, der Elektrolysevorrichtung, der Verwendung sowie auf die Figuren und das Beispiel Bezug genommen, und umgekehrt.

Gegenstand der vorliegenden Erfindung ist ferner eine Elektrolysevorrichtung, aufweisend einen Aufnahmebereich zum Aufnehmen von Wasser und aufweisend wenigstens eine Elektrode, wie diese vorstehend im Detail beschrieben ist, wobei die wenigstens eine Elektrode zumindest teilweise in dem Aufnahmebereich angeordnet und mit Licht, insbesondere Sonnenlicht, bestrahlbar ist.

Die vorbeschriebene Elektrolysevorrichtung weist zunächst einen Aufnahmebereich, wie etwa einen Behälter auf, der zum Aufnehmen von Wasser dient, welches durch die Elektrolysevorrichtung elektrolytisch in Wasserstoff und Sauerstoff gespalten werden soll. Mit Bezug auf die Elektrode wird auf die vorstehenden Ausführungen verwiesen. Dabei kann beispielsweise eine nicht oder vollständig und einheitlich dotierte Elektrode vorgesehen sein, die über eine elektrische Verbindung mit einer Gegenelektrode, etwa aus Platin, verbunden ist. Alternativ kann eine gegensätzliche Dotierungsbereiche aufweisende Elektrode vorgesehen sein, welche autark, also ohne Gegenelektrode, vorgesehen sein kann. Die wenigstens eine Elektrode sollte dabei mit dem elektrolytisch zu spaltenden Wasser in Kontakt gelangen und daher zumindest teilweise, insbesondere vollständig, in dem Aufnahmeraum beziehungsweise in in dem Behälter vorliegenden Wasser angeordnet sein.

Um eine photokatalytische Elektrolyse zu ermöglichen, ist es ferner vorgesehen, dass die Elektrode, welche wie vorstehend beschrieben aus einer Siliciumcarbidstruktur ausgestaltet ist, mit Licht bestrahlbar ist. Insbesondere ist die entsprechende Elektrode mit Sonnenlicht bestrahlbar. Dazu kann die Elektrolysevorrichtung beziehungsweise der Behälter zumindest teilweise transparent beziehungsweise lichtdurchlässig sein. So kann eine ausreichende Menge an Licht, insbesondere im sichtbaren Spektralbereich, an die Elektrode gelangen und so die für die Elektrolyse notwendige Energie beziehungsweise Potentialdifferenz liefern.

Eine derartige Elektrolysevorrichtung kann mit einer hohen Effizienz und auf kostengünstige Weise das elektrolytische Spalten von Wasser ermöglichen. Im Detail kann durch die Faserstruktur der Elektrode eine hohe Oberfläche und ferner eine gute Durchdringung der Elektrode mit Wasser geschaffen werden. Dadurch kann es erlaubt werden, dass eine vergleichsweise hohe Effizienz der Wasserspaltung ermöglicht wird. Darüber hinaus kann durch das verwendete Fasermaterial, nämlich das Siliziumcarbid, eine Photokatalyse mit einem hohen Wirkungsgrad geschaffen werden, wie dies vorstehend mit Bezug auf das Verfahren im Detail beschrieben ist.

Darüber hinaus zeichnet sich die vorbeschriebene Elektrolysevorrichtung durch einen einfachen und dadurch kostengünstig erhältlichen Aufbau aus.

In einer Ausgestaltung kann es dabei vorgesehen sein, dass eine Vorrichtung zum Abführen thermischer Energie von in der Elektrolysevorrichtung befindlichem Wasser oder von aus der Elektrolysevorrichtung geleitetem Wasser oder von in die Elektrolysevorrichtung geleitetem Wasser vorgesehen ist. Beispielsweise kann ein Kreislauf zum Führen von in der Elektrolysevorrichtung befindlichem Wasser vorgesehen sein, wobei ferner eine Vorrichtung zum Abführen thermischer Energie von in dem Kreislauf geführtem Wasser vorgesehen ist. Dabei kann die Vorrichtung insbesondere auf in der Elektrolysevorrichtung befindliches oder in diese oder aus dieser geleitetes Wasser wirken und so als der Elektrolysevorrichtung zugehörig angesehen werden. Beispielsweise kann zum Abführen thermischer Energie ein Wärmetauscher vorgesehen sein.

In dieser Ausgestaltung kann eine weitere Wirkungsgradsteigerung ermöglicht werden. Im Detail kann es in dieser Ausgestaltung ausgenutzt werden, dass in der Elektrolysevorrichtung befindliches Wasser erhitzt wird durch das Einstrahlen von Licht für das Aktivieren der Photokatalyse. Ein Grund hierfür kann darin gesehen werden, dass insbesondere bei einer wie vorstehend beschrieben ausgestalteten Elektrode der Infrarot-Anteil des Sonnenlichts für die Elektrolyse nicht verwendet wird. Das Erhitzen des Wassers kann somit nach dem Prinzip der Solarthermie genutzt werden und die thermische Energie dem Wasser, etwa durch einen Wärmetauscher, entzogen werden.

Hinsichtlich weiterer Vorteile und technischer Merkmale der vorbeschriebenen Elektrolysevorrichtung wird hiermit explizit auf die Beschreibung der Elektrode, der Verfahren, der Verwendung sowie auf die Figuren und das Beispiel Bezug genommen, und umgekehrt.

Gegenstand der vorliegenden Erfindung ist ferner ein Verfahren zum photokatalysierten elektrolytischen Spalten von Wasser, aufweisend die Verfahrensschritte:
h) Einfüllen von Wasser in eine Elektrolysevorrichtung, insbesondere in den Aufnahmeraum einer Elektrolysevorrichtung, wie diese vorstehend im Detail beschrieben ist; und
i) Bestrahlen der wenigstens einen Elektrode mit Licht, insbesondere mit Sonnenlicht. Ein derartiges Verfahren kann mit einer hohen Effizienz und auf kostengünstige Weise das elektrolytische Spalten von Wasser ermöglichen. Im Detail kann durch die Faserstruktur der Elektrode eine hohe Oberfläche und ferner eine gute Durchdringung der Elektrode mit Wasser geschaffen werden. Dadurch kann es erlaubt werden, dass eine vergleichsweise hohe Effizienz der Wasserspaltung ermöglicht wird. Darüber hinaus kann durch das verendete Fasermaterial, nämlich das Siliziumcarbid, eine Photokatalyse durch das bloße Einstrahlen von Licht, wie etwa Sonnenlicht, auf die Elektrode mit einem hohen Wirkungsgrad geschaffen werden, wie dies vorstehend mit Bezug auf das Verfahren im Detail beschrieben ist. Dadurch kann das Verfahren auf externe Spannungsquellen verzichten, was sowohl die Einfachheit als auch die Anwendbarkeit des Verfahrens verbessert beziehungsweise erleichtert.

Hinsichtlich weiterer Vorteile und technischer Merkmale des vorbeschriebenen Verfahrens wird hiermit explizit auf die Beschreibung der Elektrode, der Elektrolysevorrichtung, der Verwendung sowie auf die Figuren und das Beispiel Bezug genommen, und umgekehrt.

Weiterhin betrifft die vorliegende Erfindung die Verwendung einer wie vorstehend beschrieben Elektrode oder einer wie vorstehend beschrieben Elektrolysevorrichtung oder eines wie vorstehend beschrieben Verfahrens zum photokatalytischen elektrolytischen Spalten von Wasser.

Hinsichtlich weiterer Vorteile und technischer Merkmale der vorbeschriebenen Verwendung wird hiermit explizit auf die Beschreibung der Elektrode, der Elektrolysevorrichtung, der Verfahren sowie auf die Figuren und das Beispiel Bezug genommen, und umgekehrt.

Nachfolgend wird die Erfindung anhand von Figuren und eines bevorzugten Ausführungsbeispiels exemplarisch erläutert, wobei die nachfolgend dargestellten Merkmale sowohl jeweils einzeln als auch in Kombination einen Aspekt der Erfindung darstellen können, und wobei die Erfindung nicht auf die nachfolgenden Beispiele beschränkt ist.

Es zeigt:
Fig. 1 Eine Ausgestaltung einer Elektrolysevorrichtung mit einer Elektrode gemäß der vorliegenden Erfindung;
Fig. 2 Eine weitere Ausgestaltung einer Elektrolysevorrichtung mit einer weiteren Elektrode gemäß der vorliegenden Erfindung; und
Fig. 3 Eine schematische Darstellung zeigend ein Verfahren zum Herstellen einer Elektrode gemäß der vorliegenden Erfindung.

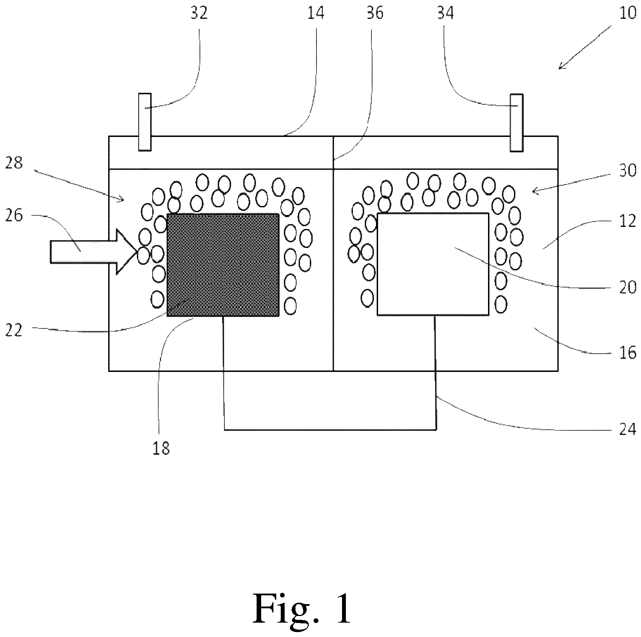

In der Figur 1 ist eine Ausgestaltung einer Elektrolysevorrichtung 10 gezeigt. Die Elektrolysevorrichtung 10 dient insbesondere einem photokatalytischen Spalten von Wasser 16 in Sauerstoff und Wasserstoff. Eine derartige Elektrolysevorrichtung 10 weist einen Aufnahmebereich 12 zum Aufnehmen von Wasser 16 auf. Der Aufnahmebereich 12 kann beispielsweise durch einen Behälter 14 gebildet beziehungsweise definiert werden. In dem Aufnahmebereich 12 ist das Wasser 16 angeordnet. Dabei ist ferner wenigstens eine Elektrode 18, gemäß Figur 1 zwei Elektroden 18, 20 vorgesehen. Die Elektroden 18, 20 sind dabei derart angeordnet, dass diese zumindest teilweise, beispielsweise vollständig in dem Aufnahmebereich 12 beziehungsweise in dem Wasser 16 angeordnet sind.

Die Elektrode 20 kann beispielsweise eine Metallelektrode sein, wie beispielsweise aus Platin ausgestaltet sein. Die Elektrode 18 weist einen Grundkörper 22 auf, der aus einer Faserstruktur ausgebildet ist. Die Faserstruktur ist dabei aus Siliziumcarbid ausgestaltet und ist ferner porös derart, dass das Wasser 16 in das Innere der Faserstruktur eindringen kann. Mit Bezug auf das Siliziumcarbid kann dieses insbesondere einkristallin sein und/oder können die Fasern der Faserstruktur eine Dicke im Mikrometerbereiche aufweisen. In der Figur 1 ist ferner gezeigt, dass die Elektroden 18, 20 durch eine elektrische Verbindung 24 miteinander verbunden sind.

Dadurch, dass die Elektrode 18 aus faserartigem einkristallinem Siliziumcarbid ausgestaltet ist, kann diese effektiv einer photokatalytischen Wasserspaltung dienen. Insbesondere dann, wenn Licht, wie etwa Sonnenlicht 26 auf die Elektrode 18 scheint, kann das Wasser 16 elektrolytisch unter Bildung von Wasserstoff 28 und Sauerstoff 30 gespalten werden. Der Wasserstoff 28 und der Sauerstoff 30 können jeweils durch Gasauslässe 32, 34 aus dem Behälter 14 geleitet und gesammelt werden. Die Trennung der entstehenden Gase kann besonders effektiv sein, wenn eine Trennung 36 zwischen den Elektroden 18, 20 vorgesehen ist beziehungsweise wenn die Trennung 36 den Aufnahmebereich 12 in zwei Elektrodenbereiche teilt.

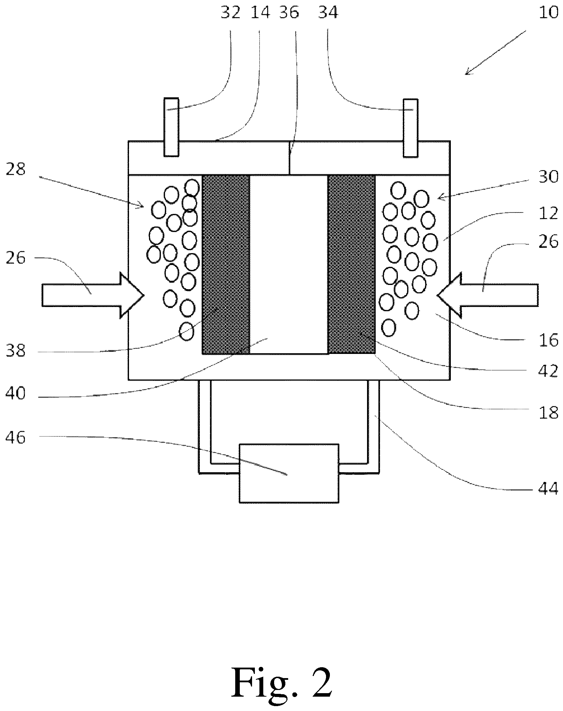

In der Figur 2 ist eine weitere Ausgestaltung einer Elektrolysevorrichtung 10 gezeigt, wobei mit Bezug auf Fig. 1 gleiche oder vergleichbare Bauteile mit den gleichen Bezugszeichen versehen sind.

In der Figur 2 ist nur eine Elektrode 18 vorgesehen, welche insgesamt drei Elektrodenbereiche 38, 40, 42 aufweist, die jeweils aus faserartigem Siliziumcarbid ausgestaltet sind. Die Elektrodenbereiche 38 und 42 sind dabei gegensätzlich dotiert derart, dass ein Elektrodenbereich 38 n-dotiert ist und ein Elektrodenbereich 42 p-dotiert ist und ein Elektrodenbereich 40 undotiert ist. Dadurch kann eine elektrolytische Wasserspaltung bei dem Vorsehen nur einer Elektrode 18 ermöglicht werden. Wenn die Elektrode 18 mit Licht, wie etwa mit Sonnenlicht 26 bestrahlt wird, kann die Elektrolyse photokatalytisch stattfinden.

In der Figur 2 ist ferner ein Kreislauf 44 gezeigt, in welchem ein Mittel 46 zu Abführen thermischer Energie von dem Wasser 16, welches durch die Lichteinstrahlung erhitzt wird, vorgesehen ist. Das Mittel 46 kann beispielsweise ein Wärmetauscher sein.

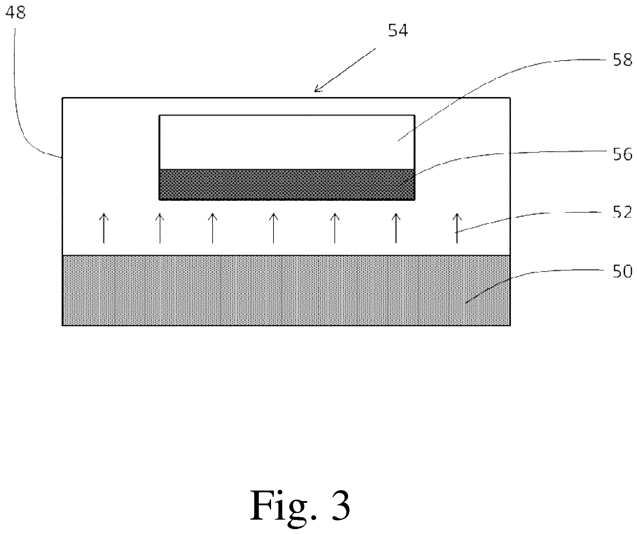

Eine Herstellung für eine Elektrode 18 ist in der Figur 3 gezeigt. In der Figur 3 ist ein Reaktor 48, wie beispielsweise ein beheizbarer Ofen gezeigt, in welchem ein Gemisch 50 aufweisend eine Kohlenstoffquelle und eine Siliziumquelle angeordnet ist. Durch ein Erhitzen des Reaktors 48 auf eine Temperatur von ≥ 1700°C kann ausgehend von dem Gemisch 50 ein Siliziumcarbid-haltiges gas als Reaktionsgas, beispielsweise, entstehen, wie dies durch die Pfeile 52 dargestellt werden soll. Ferner ist ein Körper 54 vorgesehen, der etwa als Elektroden-Ausgangsgrundkörper in dem Reaktor 48 angeordnet werden kann, und der eine kohlenstoffhaltige Faserstruktur aufweist. Durch das aus dem Gemisch 50 entstehende Reaktionsgas kann der Kohlenstoff der Faserstruktur des Körpers 54 durch Siliziumcarbid ausgetauscht werden.

Weiterhin kann das Gemisch 50 einen Dotierstoff aufweisen, so dass der Körper 54 dotiertes Siliziumcarbid ausbilden kann. Wenn dieser beziehungsweise die ausgebildete Elektrode 18 zwei unterschiedlich dotierte Elektrodenbereiche 38 und 42 aufweisen soll, kann der Körper 54 zunächst einseitig behandelt werden. Dies ist in der Figur 3 derart dargestellt, dass der Körper 54 einen Bereich 56 aufweist, der dotiertes Siliziumcarbid aufweist und wobei der Körper 54 weiterhin einen Bereich 58 aufweist, der undotiertes Siliziumcarbid aufweisen kann beziehungsweise der noch Kohlenstoff aufweisen kann. Nach einer definierten Zeit kann der Körper 54 umgedreht werden und das Gemisch ausgetauscht werden, um so unterschiedlich dotierte Elektrodenbereiche 38, 42 und einen dazwischen angeordneten nicht dotierten Elektrodenbereich ausbilden zu können, wenn beispielsweise zunächst das Gemisch einen n-Dotierstoff, anschließend keinen Dotierstoff und danach einen p-Dotierstoff aufweist.

### Ausführungsbeispiel

Im Folgenden wird zunächst der Herstellungsprozess für ein Gemisch aufweisend Kohlenstoff und Silizium beschrieben, welches ein Reaktionsgas erzeugen kann, das in Kontakt mit einem Elektroden-Ausgangsgrundkörper gebracht werden kann.

Herstellung des Gemisches aufweisend eine Kohlenstoffquelle und eine Siliziunmquelle: Im Folgenden wird die chemische Zusammensetzung, Sol-Gel-Aufbereitung mit verschiedenen Trocknungsschritten bei 70°C bis 200°C, sowie abschließende Gewinnung des Si-C-Feststoffgranulates bei 1000°C beschrieben.

Flüssigzucker, Tetraethylorthosilikat und Ethanol werden zu einem Sol vermischt und bei 60 - 70°C unter Luftabschluss zum Gelieren gebracht. Die Zusammensetzung für einen Ansatz betrug (a) eine kolloidale Suspension aus 135g Tetraethylorthosilikat (TEOS) in 168,7g Ethanol gelöst als Siliziumquelle und (b) eine Lösung aus 68g Sacharose als Kohlenstoffquelle, in 75g destilliertem Wasser, der 37,15g Salzsäure (HCl) als Katalysator zum Ausbilden von Invertzucker hinzugefügt wird. Anschließend wurde Lösung (a) mit dem Flüssigzucker (b) unter Rühren miteinander vermischt. Alternativ kann anstatt der Lösung (b) auch direkt Flüssigzucker (Invertzucker, 122g 70%ig) verwendet werden. Dann wird kein Wasser zugesetzt und nur sehr wenig Salzsäure (5.2g), da diese nur noch zum Start des Gelierprozesses benötigt wird. Dieses Sol wird bei 50°C gealtert und anschließend bei 150 - 200°C getrocknet.

Für die Herstellung von SiC-Fasern wird vorzugsweise gröberes Granulat benötigt (einige 10 µm), so dass bei dem Altern und/oder bei dem Trocknen zeitweises Rühren erfolgt. Dieses Granulat beziehungsweise Pulver wird von verbliebenen ungewünschten Reaktionsprodukten bei 1000°C im Stickstoff- oder Argon-Gasstrom befreit und abschließend ggf. gemahlen.

Ferner kann eine Modifikation des SiC-Präkursors zum Zweck der Dotierung von SiC-Nanofasern und SiC-Nanopulvern erfolgen. Eine n-Dotierung kann etwa mit Stickstoff (beispielhafte Additive: Salpetersäure, Ammoniumchlorid, Kaliumnitrat oder Melamin), oder mit Phosphor (beispielhafte Additive: Kaliumdihydrogenphosphat oder Di-Natrium- hydrogenphosphat) erfolgen. Eine p-Dotierung kann beispielhaft mit Bor (beispielhafte Additive: Di-Natriumtetraborat) oder mit Aluminium (Add.: Aluminiumpulver) erfolgen. Die Dotierstoffe werden dem Sol beigegeben, die Mengen sind abhängig von dem konkreten Additiv und der gewünschten Dotierkonzentration.

Anschließend kann eine kommerzielle poröse Graphitplatte oder Carbonfaserplatte beispielsweise mit den Abmessungen 100mm x 100mm x 4mm in einem Hochtemperaturofen so platziert werden, dass darunter ein Graphittiegel mit Si-C-Präcursor-Granulat Platz findet. Der Abstand zwischen beiden beträgt ca. 30 mm. Bei 1800°C wird das Granulat zu einem Reaktionsgas umgesetzt, welches den Konversionsprozess in dem Graphitkörper in Gang setzt. Nach ca. 50 Minuten wird in der beschriebenen Anordnung eine einseitige Umwandlungstiefe von 1 mm erreicht, wobei ohne Temperaturgradient gearbeitet wird. Der Ofen ist mit Schutzgas (Argon) gefüllt. Während der Präcursor-Vergasung wird das Argon nach und nach durch Si-C-Gas ersetzt. Der Gasdruck wird bei Normalatmosphäre gehalten. Eine Erhöhung des Gasdrucks führt zu einer Verringerung der Konversionszeit (5%ige Druckerhöhung gegen Normaldruck bewirkt 25%ige Verringerung der Konversionszeit).

Als Ausgangssubstrat kann eine Porosität der Platte von 60%-90% besonders vorteilhaft sein. Beispielsweise können die Poren durch Beimengungen, wie etwa einen Binder, verschlossen sein.

## Patentansprüche

1. Verfahren zum Herstellen einer Elektrode (18), insbesondere für eine photokatalytische elektrolytische Wasserspaltung, aufweisend die Verfahrensschritte:
a) Bereitstellen eines Elektroden-Ausgangsgrundkörpers, wobei der Ausgangsgrundkörper kohlenstoffhaltige Fasern aufweist;
b) Bereitstellen eines Gemisches (50) umfassend eine Kohlenstoffquelle und eine Siliziumquelle;
c) Erhitzen des Gemisches (50), insbesondere mit einer Temperatur von wenigstens 1700°C, unter Ausbildung eines Reaktionsgases aufweisend Silizium und Kohlenstoff oder aufweisend eine Silizium-Kohlenstoffverbindung; und
d) In Kontakt bringen des Ausgangsgrundkörpers mit dem Reaktionsgas unter Erzeugung eines Elektroden-Grundkörpers, wobei der Elektroden-Grundkörper Siliziumcarbid-Fasern aufweist, **dadurch gekennzeichnet, dass** eine von den kohlenstoffhaltigen Fasern ausgebildete Faserstruktur an zwei unterschiedlichen Bereichen mit unterschiedlichen Dotierstoffen behandelt wird, wobei an einem ersten Bereich eine p-Dotierung erfolgt und wobei an einem zweiten Bereich eine n-Dotierung erfolgt.

2. Verfahren nach Anspruch 1, **dadurch gekennzeichnet, dass** das in Verfahrensschritt b) verwendete Gemisch (50) umfassend eine Kohlenstoffquelle und eine Siliziumquelle bereitgestellt wird unter Verwendung eines Sol-Gel-Prozesses.

3. Verfahren nach Anspruch 2, **dadurch gekennzeichnet, dass** der Sol-Gel-Prozess zumindest die folgenden Verfahrensschritte aufweist:
e) Bereitstellen eines Präkursorgemisches mit einem Siliziumpräkursor, einem Kohlenstoffpräkursor und gegebenenfalls einem Dotierstoff, wobei das Präkursorgemisch in einem Lösungsmittel vorliegt;
f) Behandeln des Präkursorgemisches bei erhöhter Temperatur unter Trocknung des Präkursorgemisches; und
g) gegebenenfalls Erhitzen des getrockneten Präkursorgemisches auf eine Temperatur in einem Bereich von ≥ 800°C bis ≤ 1200°C, insbesondere in einem Bereich von ≥ 900°C bis ≤ 1100°C.

4. Verfahren nach einem der Ansprüche 1 bis 3, **dadurch gekennzeichnet, dass** die kohlenstoffhaltigen Fasern zumindest teilweise mit einem Dotierstoff behandelt werden.

5. Elektrode für eine photokatalytische Elektrolyse, aufweisend einen Grundkörper (22), der Fasern aus Siliziumcarbid aufweist, **dadurch gekennzeichnet, dass** die Elektrode (18) hergestellt ist nach einem Verfahren gemäß einem der Ansprüche 1 bis 4.

6. Elektrode nach Anspruch 5, **dadurch gekennzeichnet, dass** die Elektrode (18) zumindest teilweise dotiertes Siliziumcarbid aufweist.

7. Elektrode nach Anspruch 6, **dadurch gekennzeichnet, dass** die Elektrode (18) einen ersten Elektrodenbereich (38) mit p-dotiertem Siliziumcarbid aufweist, und dass die Elektrode ferner einen zweiten Elektrodenbereich (42) mit n-dotiertem Siliziumcarbid aufweist.

8. Elektrode nach einem der Ansprüche 5 bis 7, **dadurch gekennzeichnet, dass** der Grundkörper (22) eine Porosität in einem Bereich von größer oder gleich 60% bis kleiner oder gleich 90% aufweist.

9. Elektrolysevorrichtung, aufweisend einen Aufnahmebereich (12) zum Aufnehmen von Wasser (16) und aufweisend wenigstens eine Elektrode (18) nach einem der Ansprüche 5 bis 8, wobei die wenigstens eine Elektrode (18) zumindest teilweise in dem Aufnahmebereich (12) angeordnet und mit Licht bestrahlbar ist.

10. Elektrolysevorrichtung nach Anspruch 9, **dadurch gekennzeichnet, dass** eine Vorrichtung (46) zum Abführen thermischer Energie von in der Elektrolysevorrichtung (10) befindlichem Wasser (16) oder von aus der Elektrolysevorrichtung (10) geleitetem Wasser (16) oder von in die Elektrolysevorrichtung (10) geleitetem Wasser (16) vorgesehen ist.

11. Verfahren zum photokatalysierten elektrolytischen Spalten von Wasser (16), aufweisend die Verfahrensschritte:
h) Einfüllen von Wasser (16) in eine Elektrolysevorrichtung (10) nach einem der Ansprüche 9 oder 10; und
i) Bestrahlen der wenigstens einen Elektrode (18) mit Licht, insbesondere mit Sonnenlicht (26).

12. Verwendung einer Elektrode (18) nach einem der Ansprüche 5 bis 8 oder einer Elektrolysevorrichtung (10) nach einem der Ansprüche 9 oder 10 oder eines Verfahrens nach Anspruch 11 zum photokatalytischen elektrolytischen Spalten von Wasser (26).

## Claims

1. Method for producing an electrode (18), in particular for photocatalytic electrolytic water splitting, comprising the method steps:
a) providing an electrode starting basic body, wherein the starting basic body comprises carbon-containing fibers;
b) providing a mixture (50) including a carbon source and a silicon source;
c) heating the mixture (50), in particular at a temperature of at least 1700°C, while forming a reaction gas including silicon and carbon or including a silicon-carbon compound; and
d) contacting the starting basic body with the reaction gas while forming an electrode basic body, wherein the electrode basic body comprises silicon carbide fibers, **characterized in that** a fiber structure formed from the carbon-containing fibers is treated at two different regions with different dopants, wherein at a first region a p-type doping takes place, and wherein at a second region an n-type doping takes place.

2. Method according to claim 1, **characterized in that** the mixture (50) used in step b) including a carbon source and a silicon source is provided by use of a sol-gel process.

3. Method according to claim 2, **characterized in that** the sol-gel process comprises at least the following method steps:
e) providing a precursor mixture comprising a silicon precursor, a carbon precursor and optionally a dopant, wherein the precursor mixture is present in a solvent;
f) treating the precursor mixture at an elevated temperature while drying the precursor mixture; and
g) optionally heating the dried precursor mixture to a temperature in a range of ≥ 800°C to ≤ 1200°C, in particular in a range of ≥ 900°C to ≤ 1100°C.

4. Method according to any one of claims 1 to 3, **characterized in that** the carbon-containing fibers are at least partially treated with a dopant.

5. Electrode for photocatalytic electrolysis comprising a basic body (22) which includes fibers of silicon carbide, **characterized in that** the electrode (18) is produced according to a method according to any one of claims 1 to 4.

6. Electrode according to claim 5, **characterized in that** the electrode (18) comprises at least partially doped silicon carbide.

7. Electrode according to claim 6, **characterized in that** the electrode (18) comprises a first electrode region (38) including p-doped silicon carbide, and that the electrode further comprises a second electrode region (42) including n-doped silicon carbide.

8. Electrode according to any one of claims 5 to 7, **characterized in that** the basic body (22) has a porosity in a range of greater than or equal to 60% to less than or equal to 90%.

9. Electrolysis device comprising a storage area (12) for storing water (16) and comprising at least one electrode (18) according to any one of claims 5 to 8, wherein the at least one electrode (18) is at least partially disposed in the storage area (12) and can be irradiated with light.

10. Electrolysis device according to claim 9, **characterized in that** a device (46) for dissipating thermal energy from water (16) contained in the electrolysis device (10) or from water (16) discharged from the electrolysis device (10) or from water (16) fed into the electrolysis apparatus (10) is provided.

11. Method for photocatalyzed electrolytic splitting of water (16), comprising the method steps:
h) filling water (16) into an electrolysis device (10) according to claim 9 or 10; and
i) irradiating the at least one electrode (18) with light, in particular with sunlight (26).

12. Use of an electrode (18) according to any one of claims 5 to 8 or an electrolysis device (10) according claim 9 or 10 or a method according to claim 11 for photocatalytic electrolytic splitting of water (26).

## Revendications

1. Procédé de fabrication d'une électrode (18), notamment, pour une lyse de l'eau électrolytique photo catalytique, présentant les étapes de procédé :
a) de fourniture d'un corps de base de départ pour électrode, le corps de base de départ présentant des fibres contenant du carbone ;
b) de fourniture d'un mélange (50) comprenant une source de carbone et une source de silicium ;
c) de chauffage du mélange (50), en particulier à une température d'au moins 1700 °C, moyennant la formation d'un gaz de réaction présentant du silicium et du carbone ou présentant un composé de silicium et de carbone ; et
d) de mise en contact du corps de base de départ avec le gaz de réaction moyennant la création d'un corps de base d'électrode, où le corps de base d'électrode présente des fibres de carbure de silicium, **caractérisé en ce qu'**une structure fibreuse formée par les fibres contenant du carbone est traitée dans deux régions différentes avec des produits de dopage différents, où il y a un dopage de type p au niveau d'une première région et où il se produit un dopage de type n au niveau d'une seconde région.

2. Procédé selon la revendication 1, **caractérisé en ce que** le mélange (50) employé dans l'étape de procédé b) comprenant une source de carbone et une source de silicium est fourni moyennant l'utilisation d'un procédé sol-gel.

3. Procédé selon la revendication 2, **caractérisé en ce que** le procédé sol-gel présente au moins les étapes de procédé suivantes :
e) de fourniture d'un mélange de précurseurs avec un précurseur de silicium, un précurseur de carbone et éventuellement un produit de dopage, où le mélange de précurseurs est présent dans un solvant ;
f) de traitement du mélange de précurseurs à température élevée, moyennant le séchage du mélange de précurseurs ; et
g) éventuellement, de chauffage du mélange de précurseurs séché à une température dans une plage de ≥ 800 °C à ≤ 1200 °C, en particulier, dans une plage de ≥ 900 °C à ≤ 1100°C.

4. Procédé selon l'une des revendications 1 à 3, **caractérisé en ce que** les fibres contenant du carbone sont traitées au moins partiellement avec un produit de dopage.

5. Electrode destinée à une électrolyse photo catalytique présentant un corps de base (22), qui présente des fibres à base de carbure de silicium, **caractérisée en ce que** l'électrode (12) est fabriquée d'après un procédé selon l'une des revendications 1 à 4.

6. Electrode selon la revendication 5, **caractérisée en ce que** l'électrode (18) présente au moins partiellement du carbure de silicium dopé.

7. Electrode selon la revendication 6, **caractérisée en ce que** l'électrode (18) présente une première région d'électrode (38) avec du carbure de silicium dopé p et que l'électrode présente en outre une seconde région d'électrode (42) avec du carbure de silicium dopé n.

8. Electrode selon l'une des revendications 5 à 7, **caractérisée en ce que** le corps de base (22) présente une porosité dans une plage supérieure ou égale à 60 % à inférieure ou égale à 90 %.

9. Dispositif d'électrolyse, présentant une région de réception (12) pour la réception d'eau (16) et présentant au moins une électrode (18) selon l'une des revendications 5 à 8, où l'au moins une électrode (18) est disposée au moins partiellement dans la région de réception (12) et peut être illuminée avec de la lumière.

10. Dispositif d'électrolyse selon la revendication 9, **caractérisé en ce qu'**un dispositif (46) est prévu pour l'évacuation de l'énergie thermique de l'eau (16) se trouvant dans le dispositif d'électrolyse (10) ou de l'eau (16) sortant du dispositif d'électrolyse (10) ou de l'eau (16) pénétrant dans le dispositif d'électrolyse (10).

11. Procédé de lyse électrolytique photo catalysée d'eau (16) présentant les étapes de procédé :
h) de remplissage d'eau (16) dans un dispositif d'électrolyse (10) selon l'une des revendications 9 ou 10 ; et
i) d'illumination de l'au moins une électrode (18) avec de la lumière, notamment avec de la lumière solaire (26).

12. Utilisation d'une électrode (18) selon l'une des revendications 5 à 8 ou d'un dispositif d'électrode (10) selon l'une des revendications 9 ou 10 ou d'un procédé selon la revendication 11 pour la lyse électrolytique photo catalytique d'eau (26).
